# EUROPÄISCHE PATENTSCHRIFT

(11) **EP 0 861 442 B1**
(45) Veröffentlichungstag und Bekanntmachung des Hinweises auf die Patenterteilung: **08.03.2000**
(21) Anmeldenummer: 96945975.9
(22) Anmeldetag: 05.11.1996
(51) Int. Cl.: H02K 11/00, H02K 5/22

(54) **STROMMESSUNG BEI TURBOGENERATOREN**
CURRENT MEASUREMENT IN TURBOGENERATORS
MESURE DU COURANT DANS DES TURBOALTERNATEURS

(30) Priorität: 16.11.1995 DE 19542811
(43) Veröffentlichungstag der Anmeldung: 02.09.1998
(73) Patentinhaber: SIEMENS AKTIENGESELLSCHAFT, 80333 München (DE)
(72) Erfinder: KLAAR, Jürgen, D-47506 Neukirchen-Vluyn (DE)
(86) Internationale Anmeldenummer: DE9602109
(87) Internationale Veröffentlichungsnummer: WO9718477

(56) Entgegenhaltungen:
- EP-A- 0 228 012
- EP-A- 0 736 777
- WO-A-90/06519
- US-A- 4 070 572
- US-A- 4 428 017
- US-A- 4 968 912

## Beschreibung

Die vorliegende Erfindung betrifft die Strommessung bei Turbogeneratoren gemäß dem Oberbegriff des Anspruchs 1 mit einer Leistung von mindestens 1 MVA, insbesondere die Messung der Phasenströme in den Ständerwicklungen eines Turbogenerators.

Zum Schutz von Turbogeneratoren und der an sie angeschlossenen Geräte werden die Phasenströme gemessen und miteinander verglichen (siehe EP-A-0 228 012) Geeignete Schutzvorrichtungen können bei entsprechenden Abweichungen vom Sollzustand eingreifen. Bei Turbogeneratoren größerer Leistung ist die Installation einer derartigen Differentialschutzschaltung vorgeschrieben. Im normalen Betrieb eines Mehrphasengenerators liegt ein Sternpunkt der Ständerwicklung an Erde an. Von Zeit zu Zeit muß bei Sicherheitsüberprüfungen des Generators geprüft werden, ob die Hochspannungsisolierung der Ständerwicklung gegenüber dem Gehäuse in Ordnung ist. Dazu wird dann dieses geerdet, während die Erdung des Sternpunktes unterbrochen wird. Das bedeutet auch für die Stromwandler, daß Spannungen dort nicht durchschlagen dürfen. Um eine hohe Sicherheit gewährleisten zu können, werden daher die als Stromwandler eingesetzten Transformatoren stark isoliert. Die an für sich billigen herkömmlichen Stromwandler verteuern sich dadurch wieder, und der zur Hochspannungsisolierung notwendige Aufwand, vor allem bei den Gehäusedurchführungen, ist nicht unerheblich.

Einer Änderung der angewandten herkömmlichen Transformatorentechnik standen bisher Sicherheitsbedenken und hohe Kosten anderer Lösungen entgegen. Aufgrund möglicher Linearisierungsunterschiede der Phasen bei Differentialschutzmessungen ist es nämlich notwendig, daß alle Stromwandler vom selben Typ sind. Zur Messung der Ströme werden bei heutigen Turbogeneratoren Stromdurchführungen von den Wicklungsenden der Ständerwicklungen aus dem Gehäuse herausgeführt, damit dort Stromwandler sogenannter herkömmlicher Art (Stromtransformatoren) für Messungen angebracht werden kennen. Solche herkömmlichen Stromwandler sind zwar billig, weisen aber den Nachteil auf, daß sie zu groß für eine Anordnung im Gehäuse sind und aufgrund der im und um den Turbogenerator befindlichen elektromagnetischen Felder beim Einsatz zur Strommessung im Gehäuse empfindlich gestört würden. Stromdurchführungen aus dem Gehäuse sind daher hauptsächlich aufgrund der angewandten Transformatoren vonnöten. Neben dem hohen Bauaufwand solcher Zuleitungen und Durchführungen ergeben sich noch andere Probleme, z.B. bei der Kühlung der Leitungen. Außerdem ergibt sich ein hoher Aufwand, um eine genügende Hochspannungsfestigkeit der Stromwandler zu erreichen.

In der US 4,428,017 ist ein den Faraday-Effekt nutzender optischer Sensor beschrieben, welcher für eine Strommessung in Hochspannungsanlagen eingesetzt wird. Das Problem dieser vorbekannten Vorrichtung besteht darin, eine Hochspannungs-Meßvorrichtung mit einer Niederspannungs-Meßelektronik betriebssicher zu verbinden. Die Verwendung eines optischen Sensors ermöglicht die Messung hoher Ströme durch die Drehung der Polarisationsebene von Licht. Damit kann die Meßelektronik betriebssicher von den zu messenden hohen Spannungen von Strömen abgekoppelt werden.

Die zu lösende Aufgabe besteht nun darin, einen Turbogenerator mit einer Leistung von mindestens 1 MVA dahingehend weiterzuentwickeln, daß dieser kompakter gebaut werden kann, die Meßtechnik vereinfacht und störunempfindlicher wird, gleichzeitig aber das hohe Sicherheitsniveau bei niedrigeren Kosten gewahrt bleibt oder sogar verbessert wird.

Diese Aufgabe wird erfindungsgemäß durch einen Turbogenerator nach Anspruch 1 gelöst. Vorteilhafte Ausgestaltungen sind in den abhängigen Ansprüchen beschrieben.

Durch den Einsatz geeigneter Stromwandler besteht für die Meßapparaturen nur noch ein geringer Platzbedarf. Die stromführenden Leitungen, insbesondere im Bereich eines Wicklungsendes, können ohne den großen Platzbedarf der Stromdurchführungen kompakter gebaut und auch besser gekühlt werden. Ein zur Messung von Strömen benötigter Sternpunkt kann bei geeigneten Stromwandlern ebenfalls in das Generatorgehäuse verlegt werden. Die Herstellung des Generatorgehäuses vereinfacht sich dadurch nicht unerheblich, da z.B. die Trennung der Phasenströme außen durch entsprechende Isolatoren entfällt. Die durch geeignete, im Turbogeneratorgehäuse untergebrachte Stromwandler ermittelten Parameter bedürfen erfindungsgemäß im wesentlichen nur noch einer nach außen führenden Meßleitung. Die zum Einsatz geeigneten Meßwandler nutzen z.B. den Faraday-Effekt. Dieser ermöglicht eine optische Messung des lokalen Magnetfeldes. Die Führung des Lichtes durch Lichtfasern sowie Erläuterungen des Faraday-Effektes finden sich z.B. in dem Artikel "Faseroptische Sensoren" in dem Bulletin SEV/VFE 82 (1991), Seiten 21-29, werden anhand der Zeichnung auch noch erläutert. Aus der US 4,428,017 ist eine Apparatur zur Messung des Stromes mittels eines, den Faraday-Effekt nutzenden optischen Sensors bekannt. Eine weitere Möglichkeit, die Ströme zu messen, besteht in der Nutzung des Hall-Effektes. Entsprechende Stromsensoren mit Magnetfeldsonde sind bekannt.

Weitere Vorteile und Merkmale der erfindungsgemäßen Vorrichtung werden anhand der Zeichnungen erläutert. Es zeigen:
- Fig. 1: eine Seitenansicht auf denjenigen Teil des Generators, bei dem die Stromwandler außerhalb des Gehäuses angebracht sind,
- Fig. 2: eine Aufsicht von oben auf diesen Teil,
- Fig. 3: eine Prinzipskizze zur Verdeutlichung einer anderen als der herkömmlichen Meßmethode,
- Fig. 4: einen um einen Stromleiter gewickelten faseroptischen Stromwandler,
- Fig. 5: die Seitenansicht aus Fig. 1, nun ohne Stromdurchführungen, aber mit anderen, vollisolierten Stromwandlern bestückt,
- Fig. 6: den Turbogenerator mit am Sternpunkt angebrachten Stromwandlern,
- Fig. 7: einen Turbogenerator mit im Gehäuse angebrachtem Sternpunkt und Stromwandlern und
- Fig. 8: eine Seitenansicht des in Fig. 6 dargestellten Turbogenerators.

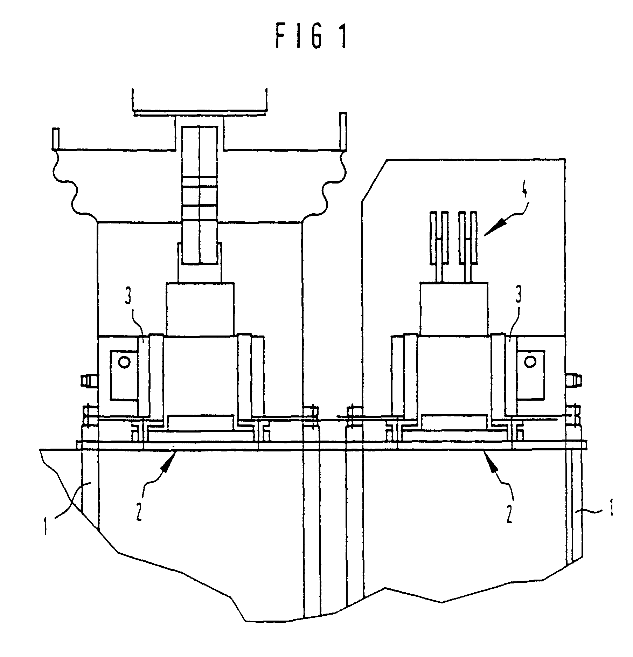

Figur 1 zeigt in einer Seitenansicht, daß herkömmliche Stromwandler 3, nämlich Transformatoren, aufgrund ihrer Empfindlichkeit gegenüber elektromagnetischen Feldern außerhalb des Turbogeneratorgehäuses 1 angebracht werden. Um die für einen Differentialschutz notwendigen Phasenströme messen zu können, wird der dafür benötigte Sternpunkt 4 bei heutigen Bauformen außerhalb des Turbogeneratorgehäuses 1 durch eine Durchführung 2 hinausgeführt. Das Turbogeneratorgehäuse 1 sorgt daher für eine Abschirmung der in Betrieb auftretenden elektromagnetischen Felder nach außen.

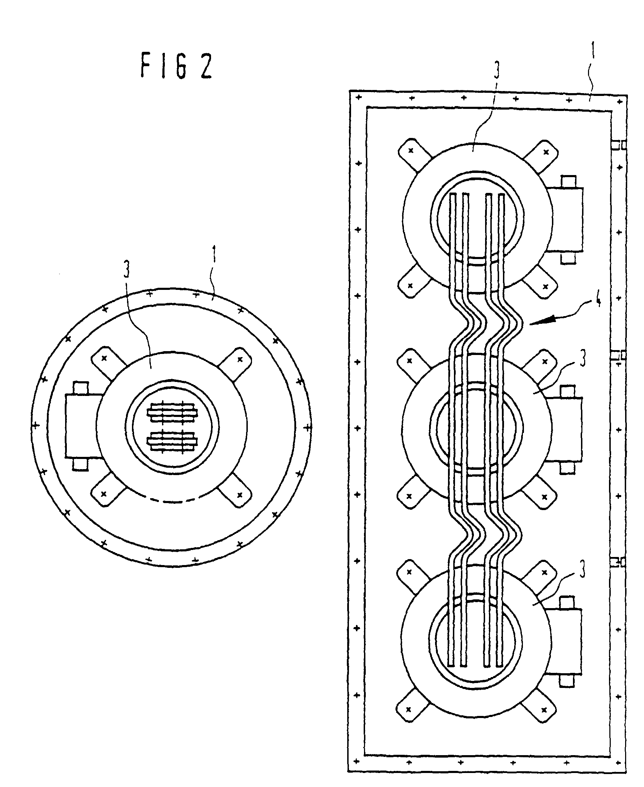

Figur 2 verdeutlicht in einer Aufsicht den in Figur 1 dargestellten Teil des Turbogenerators. Der Aufwand, um die Stromwandler 3 zur Messung am Sternpunkt 4 befestigen zu können, wird hier deutlich. Die Stromwandler 3 sind dabei auf dem Turbogeneratorgehäuse 1 aufgesetzt und befestigt.

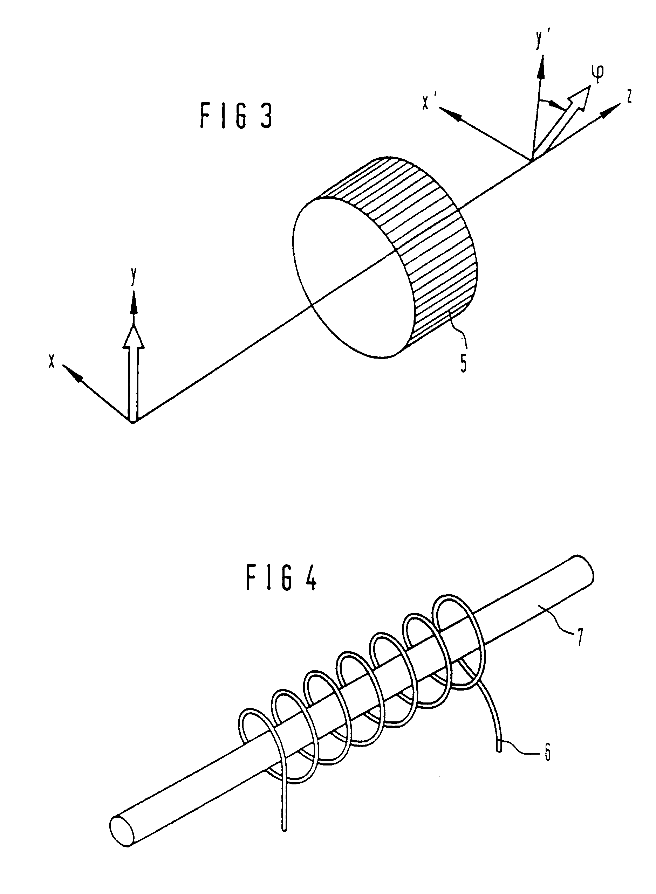

Figur 3 zeigt die Veränderung des Polarisationszustandes von linear polarisiertem Licht bei Durchgang durch ein optisch aktives Medium 5. Faraday entdeckte, daß ein magnetisches Feld in einem durchsichtigen, Isotropenmaterial eine sogenannte zirkulare Doppelbrechung erzeugt. Unter zirkular polarisiertem Licht versteht man, wenn das elektrische Feld an einem festen Ort mit der Frequenz des Lichtes rotiert, ohne dabei den Betrag zu ändern. Unterschieden wird dabei je nach Drehsinn zwischen links und rechts zirkular polarisiertem Licht. Von Doppelbrechung spricht man, wenn in einem Material die Phasengeschwindigkeit des Lichtes vom Polarisationszustand und der Ausbreitungsrichtung abhängt. Das bedeutet, ein Material ist dann zirkular doppelbrechend, wenn die Ausbreitungsgeschwindigkeit von links und rechts zirkular polarisiertem Licht verschieden ist. Die Differenz der beiden, links und rechts unterschiedlichen Brechungsindizes ergibt die zirkulare Doppelbrechung. Sie führt zu einer Drehung der Schwingungsebene des linear polarisierten Lichtes um einen Winkel Phi. In Isotropenmaterialien kann eine zirkulare Doppelbrechung auch durch ein Magnetfeld erzeugt werden, was als Faraday-Effekt bezeichnet wird. Zur Erklärung desselben soll das Lorenz-Modell der Wechselwirkung von Licht und Materie dienen. Eine einfallende elektromagnetische Welle regt durch ihr elektrisches Feld die Elektronen des Isotropenmaterials zu erzwungenen Schwingungen an. Augrund des Magnetfeldes wirkt auf die bewegten Ladungen die Lorenz-Kraft. Dieses führt zu einer meßbaren Frequenzveränderung der einfallenden rechts bzw. links zirkular polarisierten Welle. So ermöglicht der Faraday-Effekt eine optische Messung des lokalen Magnetfeldes. Wird ein Magnetfeld durch einen stromführenden Leiter erzeugt, so ist es möglich, von der Größe des Drehwinkels Phi auf die Stärke des fließenden Stromes schließen zu können.

Figur 4 zeigt ein bevorzugtes Bauprinzip der faseroptischen Stromwandler für einen erfindungsgemäßen Turbogenerator. Die Glasfaser 6 wird direkt um den Stromleiter 7, z. B. die Wicklung, gewickelt. Dadurch wird die Baugröße des Stromwandlers kleiner und kompakter.

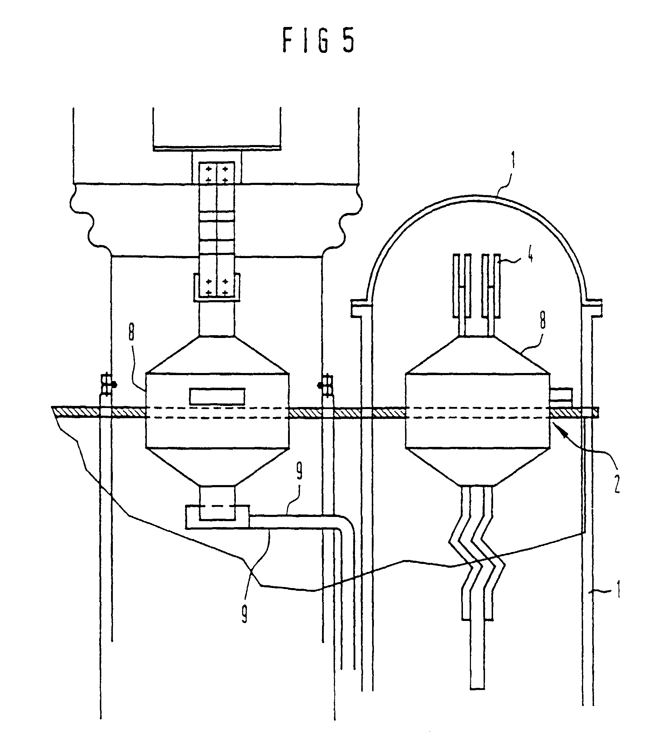

Figur 5 verdeutlicht, wie vollisolierte Stromwandler 8, die z.B. nach dem Faraday-Effekt arbeiten, ohne große Änderungen des Turbogeneratorgehäuses 1 sowie der Durchführung 2 eingebaut werden können. In einer derartigen Bauausführung, vergleichbar mit der in Figur 1, kann nun aber das Turbogeneratorgehäuse 1 um die Stromwandler 8 herumgezogen werden. Eine Meßstörung der Phasenströme, z. B. des nun im Turbogeneratorgehäuses 1 liegenden Sternpunktes 4 ist bei diesen voll isolierten Stromwandlern 8 gegenüber herkömmlichen Transformatoren ausgeschlossen. Aufgrund der Andersartigkeit des Meßverfahrens arbeiten die Stromwandler 3 störunabhängig vom elektromagnetischen Feld des Turbogenerators 12.

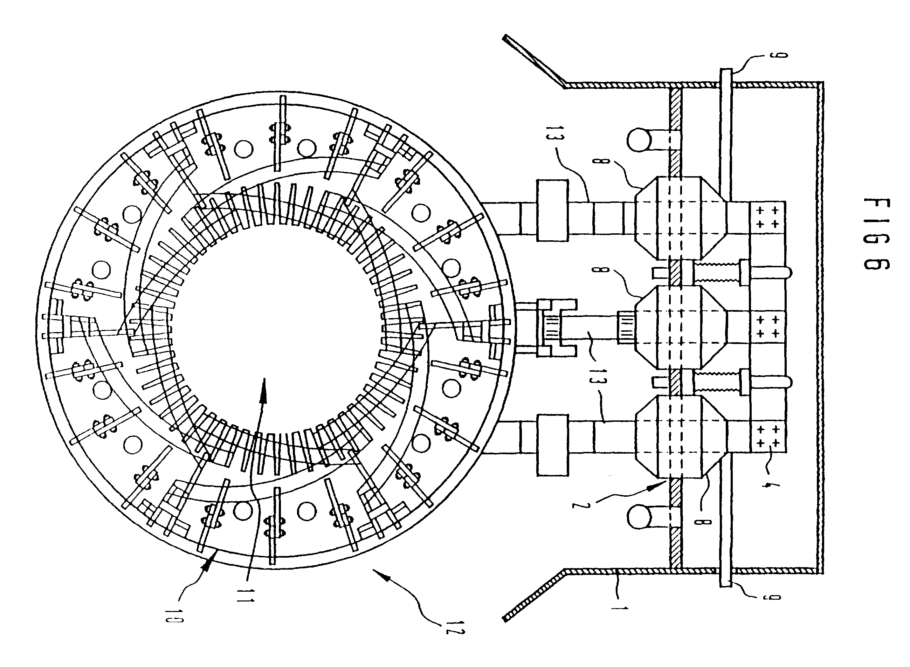

Figur 6 zeigt einen Turbogenerator 12, bestehend aus Stator 10 und Rotor 11, bei dem der Sternpunkt 4, in das Turbogeneratorgehäuse 1 integriert worden ist. Der Bauaufwand gegenüber demjenigen in Figur 1 hat sich nicht vergrößert. Die voll isolierten Stromwandler 8 benötigen nur noch Meßleitungen 9, die die Meßsignale nach außen übertragen. In dieser nun vorliegenden Bauform fällt auf, daß die Stromzuleitung 13 sehr lang gehalten wird. Der Platz innerhalb des Turbogeneratorgehäuses 1 kann jedoch sehr viel effektiver genutzt werden, wenn die Stromzuleitung 13 verkürzt bzw. sogar entfallen kann.

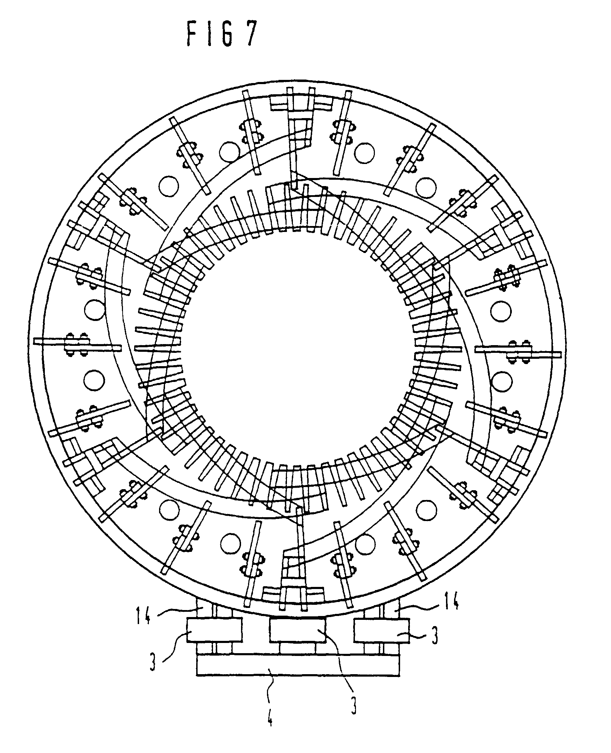

Figur 7 verdeutlicht eine vorteilhafte Führung der stromführenden Leitungen 14. Sie können im wesentlichen auf den kürzesten Wegen, und damit auch mit den geringsten Verlusten, z.B. thermischer oder elektrischer Art, innerhalb des Turbogeneratorgehäuses 1 geführt werden. Die Kühlung von derartigen Turbogeneratoren 12 gestaltet sich somit sehr viel günstiger. Elektrische Verluste werden durch Verkürzungen und/oder Wegfall von stromführenden Leitungen 14 vermindert.

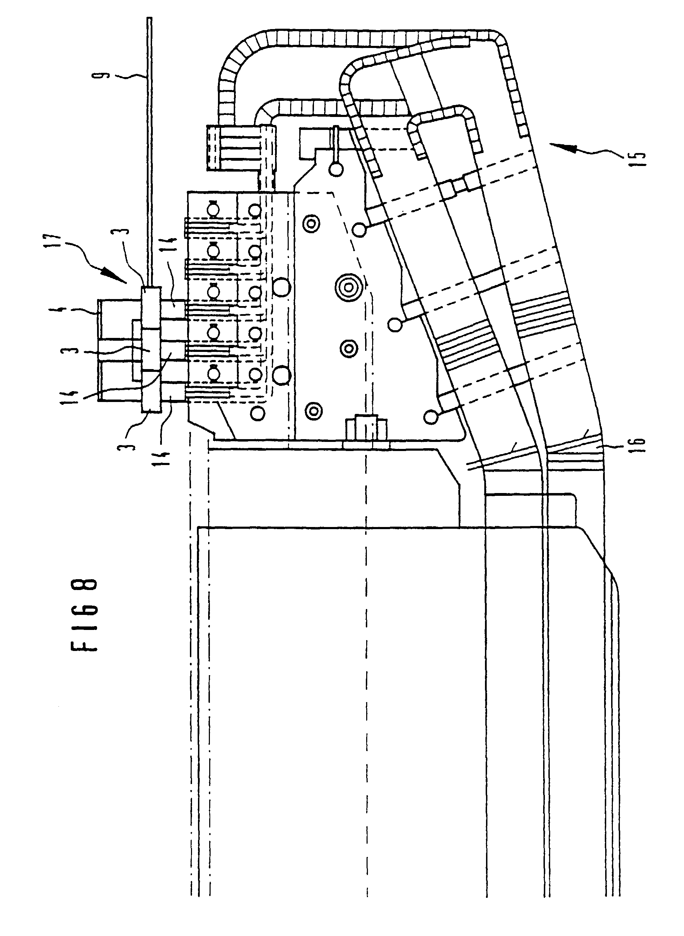

Figur 8 zeigt, wie insbesondere im Bereich des Wicklungsendes 15 die Wicklung 16 günstig gelegt werden kann. Stromführende Leitungen 14 können so kurz gehalten werden. Die Anordnung der Strommeßapparatur, im wesentlichen bestehend aus dem Stromwandler 3 sowie zugehörigen Meßleitungen, ist so innerhalb des Turbogeneratorgehäuses 1 übersichtlich und kompakt möglich. Die Erfindung, nämlich Stromwandler 3 einzusetzen, die störungsfrei bzgl. des elektromagnetischen Feldes des Turbogenerators 12 arbeiten, führt in der Gesamtbetrachtung zu viel geringeren Kosten und einer einfachen Gestaltung des Turbogeneratorgehäuses 1. Ein weiterer Vorteil ergibt sich aufgrund der anderen Meßtechnik, da die Hochspannungsfestigkeit der Meßapparatur 17 leichter als bei Transformatoren herzustellen ist. Aufgrund der einfachen Installation bietet sich neben den schon erwähnten optischen und magnetischen Stromwandlern 3 eine flexible Spule, ein Rokowski-Gürtel, an. Der Stromwandler 3 kann ebenfalls in Form eines parallelen Widerstandes, also als Shunt mit faseroptischen Hybridwandlern angebaut werden. Dieser benötigt nur einen geringen Raum. Stromsensoren mit einem induktiven Bauelement sowie Oberflächenwellensensoren benötigen in kompakter Bauform ebenfalls nur eine geringe Einbauhöhe und -tiefe. Andere, hier nicht weiter aufgeführte Stromwandler 3, die unbeeinflußt von durch den Turbogenerator 12 erzeugten elektromagnetischen Feldern arbeiten, können in einer Strommeßapparatur 17 ebenfalls innerhalb eines Turbogeneratorgehäuses 1 angebracht sein. Entsprechend den Umgebungsbedingungen um den Stromwandler 3 herum, z. B. gekennzeichnet durch eine Wasserstoffkühlung, ist es sinnvoll, den Stromwandler 3 zu kapseln, d.h., voll zu isolieren.

## Patentansprüche

1. Turbogenerator (12) für eine Leistung von mindestens 1 MVA in einem Gehäuse und mit einer Ständerwicklung, bei dem mindestens eine hochspannungsfeste Strommeßapparatur (17) zur Messung eines in zumindest einem der Leiter (14) der Ständerwicklung fließenden Stromes innerhalb des Gehäuses (1) angebracht ist, wobei der zu messende stromführende Leiter (14) der Ständerwicklung im wesentlichen auf kürzestem Wege innerhalb des Gehäuses (1) verläuft und die Strommeßapparatur (17) mindestens einen Stromwandler (3) mit einer Meßleitung (9), die durch das Turbogeneratorgehäuse (1) hinausführt, enthält, dadurch gekennzeichnet daß die Strommeßapparatur einen Stromwandler ausgewählt aus der Gruppe der folgenden Bauelemente enthält:
a) faseroptischer Stromsensor, insbesondere ein den Faraday-Effekt ausnutzender Glasfasersensor;
b) Oberflächenwellensensor;
c) Stromsensor mit magnetischer Sonde;
d) Shunt mit faseroptischem Hybridwandler.

2. Turbogenerator (12) nach Anspruch 1,
**dadurch gekennzeichnet, daß** ein zu vermessender Sternpunkt (4) des Stroms und der Stromwandler (3) im Gehäuse (1) untergebracht sind.

3. Turbogenerator (12) nach Anspruch 2,
**dadurch gekennzeichnet, daß** der Stromwandler (3) im Bereich eines Wicklungsendes (15) angebracht ist.

4. Turbogenerator (12) nach einem der vorhergehenden Ansprüche, der mindestens eine Differentialschutzschaltung aufweist, **dadurch gekennzeichnet, daß** die zur Differentialschutzschaltung gehörenden Stromwandler (3) innerhalb des Gehäuses (1) angeordnet sind.

5. Turbogenerator (12) nach einem der vorhergehenden Ansprüche, **dadurch gekennzeichnet, daß** der Stromwandler (3) vollisoliert ist.

## Claims

1. Turbine-driven generator (12) for an output of at least 1 MVA in a housing and having a stator winding, in which at least one high-voltage resistant current-measuring apparatus (17) is fitted inside the housing (1) to measure a current flowing in at least one of the conductors (14) of the stator winding, the current-carrying conductor (14), which is to be measured, of the stator winding extending essentially on the shortest path inside the housing (1) and the current-measuring apparatus (17) contains at least one current transformer (3) with a measuring lead (9) which leads out through the housing (1) of the turbine-driven generator, characterized in that the current-measuring apparatus contains a current transformer selected from the group of the following components:
a) a fibre-optic current sensor, in particular an optical fibre sensor utilising the Faraday effect;
b) a surface-wave sensor;
c) a current sensor with a magnetic probe;
d) a shunt with a fibre-optic hybrid transformer.

2. Turbine-driven generator (12) according to Claim 1, characterized in that a star point (4), which is to be measured, of the current and the current transformer (3) are accommodated in the housing (1).

3. Turbine-driven generator (12) according to Claim 2, characterized in that the current transformer (3) is fitted in the region of a winding end (15).

4. Turbine-driven generator (12) according to one of the preceding claims, which has at least one differential protective circuit, characterized in that the current transformer (3) belonging to the differential protective circuit is arranged inside the housing (1).

5. Turbine-driven generator (12) according to one of the preceding claims, characterized in that the current transformer (3) is fully insulated.

## Revendications

1. Turboalternateur (12) pour une puissance d'au moins 1 MVA dans une caisse et comprenant un enroulement de stator, dans lequel au moins un appareillage de mesure de courant (17) résistant à la haute tension et destiné à la mesure d'un courant passant dans au moins l'un des conducteurs (14) de l'enroulement de stator est monté à l'intérieur de la caisse (1), le conducteur (14), dans le lequel passe le courant à mesurer, de l'enroulement de stator s'étendant sensiblement sur le plus court chemin à l'intérieur de la caisse (1) et dans lequel l'appareillage de mesure de courant (17) comporte au moins un transformateur de courant (3) ayant une ligne de mesure (9) qui passe à l'extérieur en traversant la caisse de turboalternateur (1), caractérisé par le fait que l'appareillage de mesure de courant comporte un transformateur de courant choisi parmi le groupe des éléments suivants :
a) capteur de courant à fibre optique, notamment capteur à fibre optique exploitant l'effet Faraday ;
b) capteur d'onde de surface ;
c) capteur de courant avec sonde magnétique ;
d) shunt avec transformateur hybride à fibre optique.

2. Turboalternateur (12) selon la revendication 1, caractérisé par le fait qu'un point neutre à mesurer (4) du courant et le transformateur de courant (3) sont logés dans la caisse (1).

3. Turboalternateur (12) selon la revendication 2, caractérisé par le fait que le transformateur de courant (3) est disposé dans la zone d'une extrémité d'enroulement (15).

4. Turboalternateur (12) selon l'une des revendications précédentes et comportant au moins un circuit de protection différentielle, caractérisé par le fait que les transformateurs de courant (3) appartenant au circuit de protection différentielle sont disposés à l'intérieur de la caisse (1).

5. Turboalternateur (12) selon l'une des revendications précédentes, caractérisé par le fait que le transformateur de courant (3) est complètement isolé.
